# FASCICULE DE BREVET EUROPEEN

(11) **EP 1 816 254 B1**
(45) Date de publication et mention de la délivrance du brevet: **11.07.2012**
(21) Numéro de dépôt: 07002517.6
(22) Date de dépôt: 06.02.2007
(51) Int. Cl.: D06N 3/00, B32B 27/12, B32B 27/20, B32B 7/12, A41D 31/00, A41D 31/02

(54) **Matériau textile comprenant un composite polymere-céramique et procéde de fabrication**
Textiler Stoff, der einen Polymer/Keramik-Verbund umfasst, und Verfahren zu dessen Herstellung
Textile material comprising a polymer-ceramic composite and manufacturing method

(30) Priorité: 06.02.2006 FR 0650412
(43) Date de publication de la demande: 08.08.2007
(73) Titulaire: Casper, Jacques, 67700 Gottenhouse (FR); Boasso, Ezio, 10151 Turin (IT)
(72) Inventeur: Casper, Jacques, 67700 Gottenhouse (FR); Boasso, Ezio, 10151 Turin (IT)
(74) Mandataire: Fleurance, Raphaël

(56) Documents cités:
- EP-A- 0 489 538
- EP-A- 1 504 824
- EP-A1- 1 273 435
- EP-A2- 1 199 400
- WO-A-00/13889
- WO-A1-2004/012562
- GB-A- 2 350 073
- JP-A- 4 062 049
- US-A1- 2003 236 042
- US-A1- 2004 192 143
- DATABASE WPI Week 198935 Derwent Publications Ltd., London, GB; AN 1989-252456 XP002405585 & JP 01 183579 A (YONEHARA T) 21 juillet 1989 (1989-07-21)
- DATABASE WPI Week 198951 Derwent Publications Ltd., London, GB; AN 1989-374953 XP002405586 & JP 01 281937 A (SUN CHEM KK) 13 novembre 1989 (1989-11-13)
- DATABASE WPI Week 200329 Derwent Publications Ltd., London, GB; AN 2003-297055 XP002405587 & KR 2002 0093175 A (SUNG WON IND CO LTD) 16 décembre 2002 (2002-12-16)

## Description

### DOMAINE DE L'INVENTION

L'invention appartient au domaine des matériaux textiles techniques, en particulier les matériaux textiles possédant des propriétés de confort améliorées. Un tel matériau textile trouve son application notamment dans le domaine de la confection des vêtements intérieurs ou extérieurs, pour l'homme ou l'animal, du linge de maison et de tout autre article textile.

Plus particulièrement, l'invention vise un matériau textile comprenant une étoffe associée à un matériau susceptible d'émettre au moins un rayonnement dans la gamme des infrarouges lointains. Selon l'invention, il s'agit d'un matériau composite à base d'au moins un polymère et d'au moins une céramique susceptible d'émettre un rayonnement infrarouge, en particulier un rayonnement infrarouge lointain.

### ETAT DE LA TECHNIQUE

On considère généralement que les infrarouges possèdent une longueur d'onde comprise entre 0,76 µm et 1000 µm. Ils sont classés entre des infrarouges proches, des infrarouges moyens et des infrarouges lointains, ces derniers correspondant à la gamme de longueurs d'onde de 3 µm à 1000 µm inclus.

La plupart des matériaux émettent des infrarouges lointains. Ainsi, il est connu que certaines céramiques, peuvent émettre des rayonnements infrarouges lorsqu'elles reçoivent de l'énergie.

En outre, lorsqu'ils sont irradiés par un rayonnement infrarouge, l'eau et les matériaux organiques et/ou de haut poids moléculaire peuvent absorber partiellement le rayonnement infrarouge, en particulier un rayonnement infrarouge lointain. Les infrarouges lointains dont la longueur d'onde est comprise entre 4 µm et 14 µm, sont particulièrement intéressants. En effet, ces longueurs d'ondes favorisent la résonance et l'activation des molécules d'eau. C'est ainsi que l'eau des organismes animaux ou végétaux peut être activée par des rayonnements infrarouges lointains de ce domaine de longueurs d'ondes.

Il est connu que les rayonnements infrarouges lointains peuvent être absorbés facilement par les molécules d'eau, notamment dans le corps humain ou animal. Des rayonnements infrarouges lointains peuvent ainsi avoir des effets variés, dont notamment :
- augmenter la température de la peau et provoquer une sensation de chaleur, en étant absorbés au niveau de la peau (épiderme et/ou derme), où l'énergie des rayonnements infrarouges lointains est convertie en chaleur,
- augmenter le flux sanguin au niveau de la peau grâce à la dilatation des vaisseaux capillaires, ce qui favorise la circulation sanguine,
- activer le métabolisme,
- diminuer les sensations de douleur.

De nombreux documents brevet décrivent des effets physiologiques de infrarouges lointains. Ce domaine a fait l'objet d'études nombreuses et approfondies. Les effets des infrarouges lointains ont. été étudiés, ainsi que la composition des céramiques, afin d'atteindre une émissivité maximum.

La demande de brevet européen EP 1 504 824 A1 décrit un film de polyéthylène téréphthalate (PET) recouvert d'un matériau à base d'une résine et de céramique, utile comme film d'emballage ou de protection des aliments. Ce matériau est préparé à partir d'une pâte contenant la résine et un solvant, dans laquelle est mélangée une céramique émettrice d'infrarouges lointains. Après avoir enduit le film PET avec la pâte, sur une épaisseur donnée, celle-ci est séchée puis l'ensemble subit un calandrage. L'épaisseur de matériau à base de céramique est inférieure à celle du film PET. Il est également indiqué dans ce document qu'il est possible de remplacer le film PET par un tissu fin. Cependant, ce document manque de précision quant au procédé de fabrication. En outre, il semble possible d'améliorer la qualité du matériau pour ce qui concerne l'émission d'infrarouges lointains. En outre, ce document indique que les films obtenus sont utiles pour améliorer le maintien au chaud, le réchauffement et la santé d'êtres vivants.

La demande de brevet EP 1 199 400 A2 décrit des dispersions aqueuses de polyuréthane pour l'enduction textile. Ces dispersions contiennent 5 à 150 parties en poids de poudre céramique (de préférence du carbure de silicium) pour 100 parties en poids de polymère. Les couches d'enduction réalisées à partir de cette composition sont présentées comme permettant d'améliorer la protection contre les ultraviolets et l'isolation thermique. Cette dernière propriété résulte, selon cette demande de brevet, de la combinaison des effets de la poudre céramique à ceux de micro-bulles. Cette demande de brevet n'enseigne pas la production d'infrarouges par les couches d'enduction à base de polyuréthane et de carbure de silicium, en particulier aux fins d'améliorer le confort des utilisateurs de vêtements fabriqués avec des textiles ainsi enduits.

A ce jour, les avantages associés aux infrarouges lointains ont pu être décrits. Mais ces publications ne concernent pas les niveaux d'émission, la protection et le confort des utilisateurs.

### OBJECTIFS DE L'INVENTION

Ainsi, un objectif essentiel de la présente invention est de proposer un nouveau matériau textile technique possédant des propriétés améliorées de confort d'utilisation.

Un autre objectif de l'invention est de proposer un matériau textile, comprenant une céramique dont le niveau d'émissivité est proche de 100 %, procurant une protection optimale et un confort satisfaisant.

Un autre objectif de l'invention est de proposer un matériau textile qui possède une ou plusieurs des caractéristiques suivantes : imperméabilité à l'eau sous forme liquide, perméabilité à la vapeur d'eau, imperméabilité à l'air.

Un autre objectif de l'invention est de proposer une gamme de matériaux textiles techniques, en fonction de l'utilisation envisagée et leur procédé de fabrication.

Un autre objectif de l'invention est d'améliorer les procédés de fabrication de matériaux textiles techniques.

Un autre objectif de l'invention est de proposer un matériau textile associé à un matériau composite comprenant des particules de céramique susceptibles d'émettre un rayonnement infrarouge lointain, utile notamment pour apporter confort et bien-être aux utilisateurs d'articles confectionnés avec ce matériau textile.

Un autre objectif de l'invention est de proposer un matériau textile utile pour la fabrication ou la confection d'articles vestimentaires possédant des propriétés spécifiques, notamment celles de procurer une sensation de chaleur, et par exemple, d'être respirant, ou ignifuge.

Un autre objectif de l'invention est de proposer un matériau textile technique qui, utilisé en confection vestimentaire par exemple, permet de réchauffer, ou à tout le moins de protéger thermiquement, l'utilisateur.

Un autre objectif de l'invention est de proposer un matériau textile technique respirant, utile notamment lors de la pratique d'activités physiques et sportives, afin de diminuer l'inconfort qui peut être associé à la sudation.

Un autre objectif de l'invention est de proposer un matériau textile technique ignifuge apte à émettre des rayonnements infrarouges lointains.

D'autres objectifs et avantages de la présente invention apparaîtront au cours de la description de l'invention qui va suivre.

### BREVE DESCRIPTION DE L'INVENTION

C'est ainsi que la présente invention concerne, en premier lieu, un matériau textile comprenant au moins une étoffe, au moins une partie d'au moins l'une des deux faces de l'étoffe étant associée à au moins une couche comportant un matériau composite. Le matériau composite comprend des particules de céramique dispersées dans une matrice à base de polymère, de préférence du polyuréthane. La céramique représente de 1 à 60% en masse du matériau composite, comprend MnO₂ et CO₂O₃et est susceptible d'émettre au moins un rayonnement infrarouge lointain.

De préférence, la céramique comprend au moins un des oxydes suivants : Al₂O₃, Fe₂O₃, TiO₂, Cr₂O₃, SiO₂, MgO, ZrO₂, MnO₂, Co₂O₃, Y₂O₃. Les mélanges de plusieurs de ces oxydes sont également envisagés.

Tout particulièrement, la céramique mise en oeuvre comprend par exemple des taux élevés d'oxyde de cobalt Co₂O₃ et d'oxyde de manganèse MnO₂. Utilisés selon les ratios adéquats, les oxydes de cobalt et de manganèse favorisent une augmentation sensible de l'émissivité du matériau composite selon l'invention.

En pratique, la céramique comprend par exemple au moins 10% en masse de MnO₂ et au moins 1 % (voire au moins 5%) en masse de Co₂O₃.
Suivant un mode préféré de réalisation la céramique comprend au moins 5% de SiO₂, de préférence de 5 à 40 % de SiO₂.

Une autre composition particulièrement préférée de la céramique est la suivante, en masse :
- TiO₂ de 10 à 60%, de préférence, de 30 à 40%,
- SiO₂ de 5 à 40%, de préférence, de 10 à 20%,
- MnO₂ de 5 à 40%, de préférence, de 10 à 20%,
- Al₂O₃ de 5 à 40%, de préférence, de 10 à 20%,
- Co₂O₃ de 1 à 10%, de préférence, de 1 à 5%
- Fe₂O₃ de 1 à 20%, de préférence, de 3 à 7%,
- MgO de 0 à 10%, de préférence, de 3 à 7%,
- ZrO₂, Cr₂O₃, Y₂O₃ ≤ 5% chacun,
la somme des pourcentages étant égale à 100%.

Selon une première variante, le matériau textile est obtenu à l'issue d'un procédé comprenant une étape d'assemblage de l'étoffe et d'un film de matériau composite, à l'aide d'un adhésif. Par exemple, le procédé de fabrication du matériau textile, selon cette première variante, comprend les étapes essentielles suivantes :
- on prévoit un film de matériau composite, éventuellement sous forme de mousse,
- on applique un adhésif sur une face du film de matériau composite, et/ou sur une face de l'étoffe,
- on assemble le film de matériau composite et l'étoffe au niveau de la, ou des, face(s) sur laquelle, ou sur lesquelles, un adhésif a été éventuellement appliqué, afin d'obtenir ledit matériau textile.

Le film de matériau composite peut être fabriqué, par exemple, par extrusion, ou encore par enduction sur papier transfert, séchage et réticulation, à partir d'une composition précurseur du matériau composite.

Selon une deuxième variante, le matériau textile est obtenu à l'issue d'un procédé comprenant une étape d'enduction de l'étoffe avec une composition d'enduction précurseur du matériau composite. Dans cette hypothèse, le procédé de fabrication du matériau textile comprend les étapes essentielles suivantes :
- on met en oeuvre une composition d'enduction précurseur du matériau composite, la composition d'enduction comprenant au moins : un liquide porteur, des particules de céramique dispersées dans le liquide porteur et un polymère, ou son précurseur, dispersé ou dissout dans le liquide porteur,
- on enduit l'étoffe avec ladite composition d'enduction,
- puis on fait évaporer le liquide porteur,
- puis éventuellement, on fait réticuler le polymère, ou son précurseur, pour former la matrice du matériau composite.

Selon une troisième variante, le matériau textile est obtenu à l'issue d'un procédé comprenant une étape d'extrusion directe d'une couche de matériau composite associée à l'étoffe. Dans cette hypothèse, le procédé de fabrication du matériau textile comprend les étapes essentielles suivantes :
- on met en oeuvre une dispersion de céramique dans le polymère, ou son précurseur, à l'état liquide,
- puis on dépose la dispersion sur l'étoffe, par extrusion,
- puis on fait se solidifier le polymère, pour former la matrice du matériau composite.

Selon une première possibilité, le matériau composite n'est pas poreux. Selon une deuxième possibilité, le matériau composite se présente sous la forme d'une mousse, de préférence à porosité ouverte. Eventuellement, la matrice est à base de polymère hydrophile respirant, que le matériau soit sous forme de mousse ou non.
L'invention concerne également un matériau textile tel que défini ci-dessus, dans lequel au moins une couche (5) de matériau composite (6) est revêtue d'au moins une couche de polymère, de préférence du polytétrafluoroéthylène, de manière à former un multicouche, avantageusement un bicouche.
Avantageusement, le procédé de fabrication de ce matériau textile comprend les étapes essentielles suivantes :
- on prévoit au moins un film de matériau composite, éventuellement sous forme de mousse,
- on prévoit au moins un film de polymère, de préférence du polytétrafluoroéthylène,
- on applique un adhésif sur une face du film de matériau composite, et/ou sur une face du film de polymère,
- on assemble le film de matériau composite et le film de polymère au niveau de la, ou des, face(s) sur laquelle, ou sur lesquelles, un adhésif a été éventuellement appliqué, afin d'obtenir un multicouche, de préférence un bicouche.

Le type d'étoffe associée au matériau composite peut être très variable. Par exemple, l'étoffe est sélectionnée parmi les étoffes non tissées, les étoffes tissées (tissu chaîne et trame), les étoffes tricotées (mailles) et leurs assemblages. L'expression "assemblage d'étoffes" désigne les assemblages de plusieurs pièces d'étoffes, identiques ou différentes entre elles, face contre face, ainsi que les assemblages d'étoffes bord à bord. En outre, l'étoffe peut être fabriquée à partir de divers types de filaments, fibres et/ou fils, d'origine naturelle et/ou synthétique. Selon une variante de l'invention, l'étoffe est associée en outre à une couche de matériau ignifuge. De préférence, cette couche de matériau ignifuge est interposée entre l'étoffe et la couche de matériau composite. Dans une variante de l'invention, l'étoffe elle-même est composée de fibres ignifuges.

En deuxième lieu, l'invention concerne un article textile comprenant un matériau textile tel que défini ci-dessus. Il peut s'agir notamment d'un vêtement intérieur ou extérieur, de différents accessoires vestimentaires ou encore de linge de maison.

En troisième lieu, l'invention concerne un procédé de fabrication d'un matériau textile tel que défini ci-dessus. On envisage trois variantes principales du procédé de fabrication, qui peuvent éventuellement être combinées. La première variante consiste à réaliser un assemblage de l'étoffe et d'un film de matériau composite, éventuellement sous forme de mousse, à l'aide d'un adhésif. Les étapes essentielles du procédé de fabrication, selon cette première variante, ont été décrites ci-dessus.

Selon une deuxième variante du procédé de fabrication, on met en oeuvre une composition d'enduction qui sera déposée sur l'étoffe. Cette composition d'enduction est un précurseur du matériau composite. Les étapes essentielles du procédé d'enduction ont été indiquées ci-dessus. Il est possible, dans le cas où la couche de matériau composite est sous la forme d'une mousse, de prévoir une étape intermédiaire consistant à faire mousser la composition d'enduction précurseur du matériau composite, avant ou après avoir enduit l'étoffe avec la composition d'enduction.

### BREVE DESCRIPTION DES FIGURES

La figure 1 est une représentation schématique en coupe d'une première variante du matériau textile selon l'invention, selon un plan de coupe sensiblement perpendiculaire aux faces de l'étoffe.

La figure 2 est une représentation schématique en coupe d'une deuxième variante du matériau textile selon l'invention, selon un plan de coupe sensiblement perpendiculaire aux faces de l'étoffe.

La figure 3 est une représentation schématique en coupe d'une troisième variante du matériau textile selon l'invention, selon un plan de coupe sensiblement perpendiculaire aux faces de l'étoffe.

Les figures 4 et 5 sont des diagrammes d'émissivité d'un matériau composite selon l'exemple 1 préparé avec une céramique contenant (figure 4) ou ne contenant pas (figure 5) les oxydes Co₂O₃ et MnO₂.

### DESCRIPTION DETAILLEE DE L'INVENTION

Au sens de la présente invention, un rayonnement infrarouge lointain, ou "infrarouge lointain", est un rayonnement infrarouge dont la longueur d'onde est par exemple comprise entre 3 µm et 100 µm, de préférence, comprise entre 3 et 20 µm. Avantageusement, il s'agit d'infrarouges possédant une longueur d'onde comprise entre 4 et 15 µm, de préférence entre 4 et 14 µm.

La présente invention vise tout particulièrement un matériau textile, utile dans le domaine de la confection textile, contrairement au document EP 1 504 824 qui concerne un film de PET pour l'emballage de produits alimentaires. Selon l'invention, il s'agit de proposer un matériau textile comprenant matériau composite dans lequel est incorporé une céramique. En particulier, le matériau composite est à base d'un polymère hydrophile respirant.

Un polymère hydrophile est dit "respirant" s'il est perméable à la vapeur d'eau, mais imperméable à l'eau liquide et, avantageusement, s'il a la propriété d'être coupe-vent. L'imperméabilité d'un matériau textile peut être évaluée selon des méthodes normalisées, et exprimées en mètres de colonne d'eau.

Ainsi, une variante de l'invention consiste à mettre en oeuvre un ou plusieurs films microporeux, par exemple à base de polytétrafluoroéthylène (PTFE), de polyuréthane et de polyester (PE), revêtus sur les deux faces de polyuréthane hydrophile contenant une céramique. Cela permet de fabriquer des membranes très légères et douces et qui laissent bien passer la vapeur d'eau.

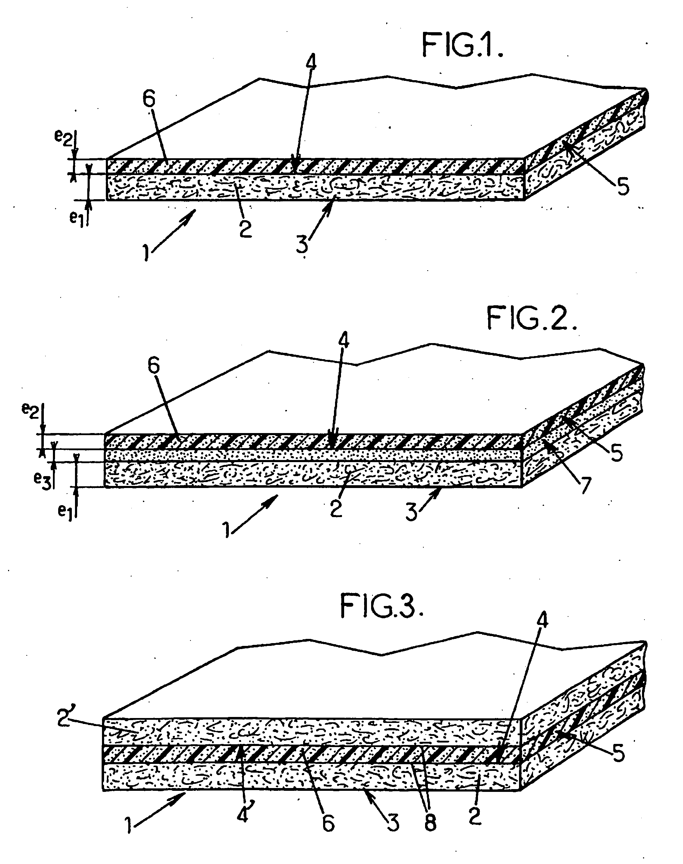

La figure 1 est une représentation schématique en perspective d'un matériau textile 1 conforme à l'invention, selon un plan de coupe perpendiculaire aux faces 3, 4 d'une étoffe. L'étoffe 2 est associée à une couche 5 d'un matériau composite 6. Le matériau composite 6 comprend une matrice à base de polymère, dans laquelle sont dispersées des particules de céramique. De préférence, les particules de céramique sont dispersées de façon homogène dans la matrice polymère. L'une des caractéristiques de la céramique est de pouvoir émettre un rayonnement infrarouge lointain. Cette émission de rayonnement infrarouge est consécutive à l'absorption de chaleur par les particules de céramique. La chaleur provient de l'environnement proche des particules de céramique.

De préférence, la céramique représente de 1 à 60% en masse du matériau composite 6. En effet, en deçà de 1% en masse, l'effet procuré par l'émission du rayonnement infrarouge lointain n'est pas sensible par l'utilisateur du matériau textile. Au-delà de 60% en masse, les propriétés mécaniques du matériau composite sont affectées. Notamment, la souplesse du matériau composite diminue, de sorte que la mise en oeuvre du matériau textile, notamment lors de la confection, devient difficile. On peut par exemple évaluer la souplesse par la résistance à la déformation du matériau composite. De préférence, la céramique représente de 5 à 50 % en masse du matériau composite 6, et mieux encore, de 20 à 30 % en masse du matériau composite 6.

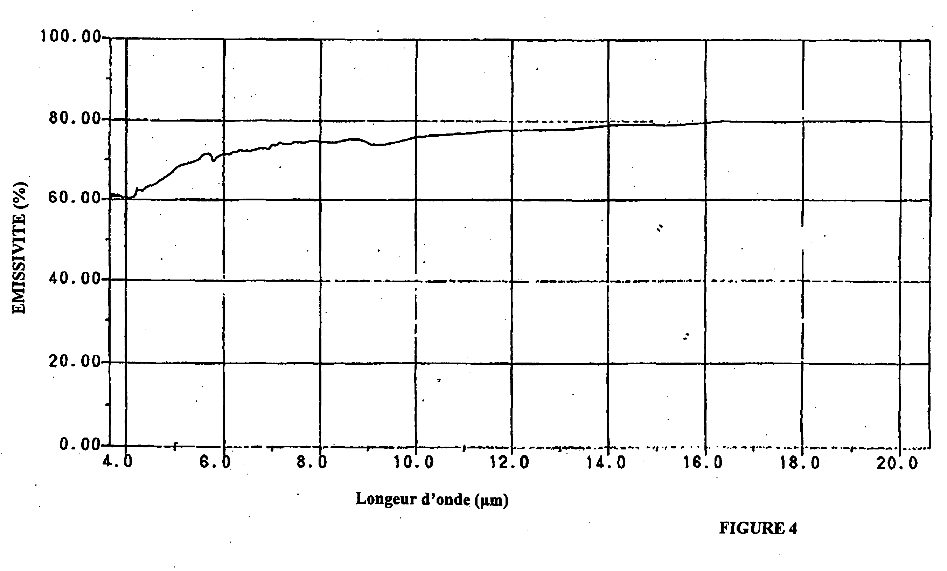

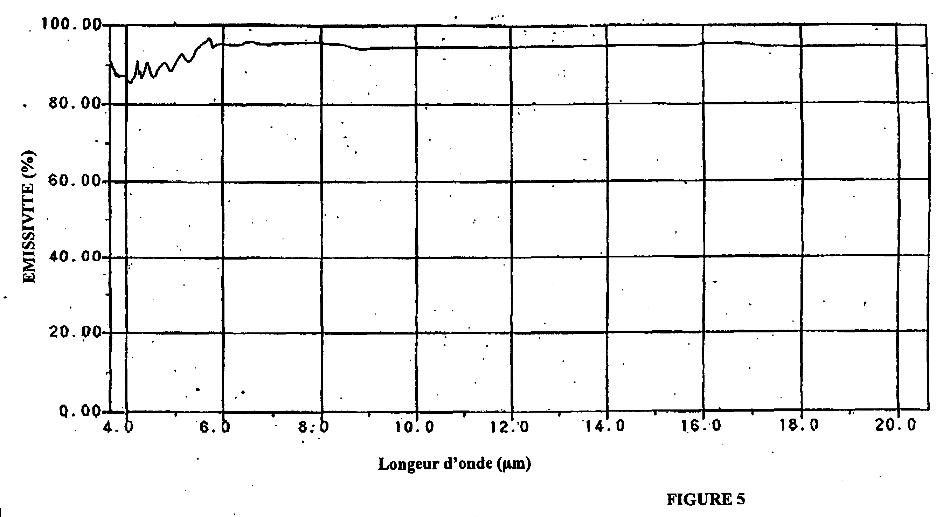

On peut évaluer la qualité du matériau composite, en termes d'émission de rayonnements infrarouges lointains, en réalisant un diagramme d'émissivité tel que représentés aux figures 4 et 5. Il s'agit de mesurer l'émissivité du matériau composite considéré, à une température donnée, par exemple la température ambiante. En fonction des utilisations envisagées, la température ambiante peut par exemple varier entre -15°C et 40°C, voire plus. Généralement, elle est comprise entre 0 et 30°C. Diverses méthodes de mesure d'émissivité d'un matériau sont connues de l'homme de l'art.

Comme illustré à la figure 1, une seule face 4 de l'étoffe 2 est en contact direct avec la couche 5 de matériau composite 6. On pourrait cependant envisager que les deux faces 3 et 4 de l'étoffe 2 soient associées à une couche de matériau composite 6. En outre, la figure 1 illustre le cas où une face de l'étoffe 2 (ici la face 4) est en contact direct avec la couche 5 de matériau composite. Il est également envisageable que l'interface entre l'étoffe 2 et la couche 5 de matériau composite soit une couche d'un autre matériau, pour conférer des propriétés supplémentaires au matériau textile. Il peut par exemple s'agir d'une couche d'un matériau ignifuge 7, interposée entre l'étoffe 2 et la couche 5 de matériau composite 6, comme illustré à la figure 2.

Selon l'invention, au moins une partie d'au moins l'une des faces d'une étoffe est associée à au moins une couche comportant un matériau composite. Cela signifie, entre autres, que la couche comportant un matériau composite peut comporter un ou plusieurs autres matériaux que le matériau composite. Par exemple, ladite couche est une mosaïque de plusieurs matériaux distincts, dont le matériau composite. De préférence, ladite couche est une couche continue de matériau composite. Par ailleurs, seule une partie d'une face de l'étoffe peut être associée à la couche de matériau composite. Ainsi, en fonction de l'article textile qui sera confectionné (par exemple en fonction du patron employé pour la confection), il est possible de n'associer qu'une partie d'une face de l'étoffe à la couche de matériau composite. De préférence, au moins une face de l'étoffe est quasiment entièrement associée à une couche de matériau composite. Dans ce contexte, "quasiment entièrement" signifie, notamment, qu'au niveau des bords, la face de l'étoffe peut ne pas être associée au matériau composite. Par souci de simplification, on désignera une "couche comportant un matériau composite" par "couche de matériau composite".

Les matériaux textiles selon l'invention comprennent au moins deux couches différenciables : une couche d'étoffe et une couche de matériau composite, même s'il existe une certaine pénétration de la couche de matériau composite dans la couche d'étoffe.

Les matériaux décrits ci-dessus, en référence aux figures 1 et 2 sont appelés "complexe deux couches" car ils comprennent un couche d'étoffe et une couche de matériau composite. L'invention vise également des "complexes trois couches" qui comprennent deux couches d'étoffe et une couche de matériau composite. Dans ce cas, le matériau composite selon l'invention est de préférence interposé entre une première étoffe et une seconde étoffe. La première étoffe et la seconde étoffe peuvent être identiques ou non. Avantageusement, elles sont distinctes, l'une ayant par exemple des propriétés déperlantes, pour protéger l'utilisateur des précipitations, l'autre étant une doublure. La figure 3 illustre un tel complexe trois couches. Dans ce cas, chacune des deux faces de la couche 5 de matériau composite 6 est en contact direct avec une face 4, 4' de l'étoffe 2, 2'.

Ainsi, l'invention vise non seulement les complexes deux couches et les complexes trois couches décrits en exemple, mais également les matériaux textiles comprenant plusieurs étoffes et/ou plusieurs couches de matériau composite.

S'agissant de l'étoffe, celle-ci est choisie en fonction de l'utilisation du matériau textile envisagé. Ainsi, l'étoffe peut être sélectionnée parmi des étoffes non tissées (par exemple les feutres), des étoffes tissées (tissu chaîne et trame) et des étoffes tricotées (mailles). L'étoffe est constituée de fibres, filaments ou fils d'origine naturelle ou synthétique. De préférence, on considère par exemple qu'un filet ou un système chaîne-trame lâche n'entre pas dans la définition d'une étoffe selon l'invention.

Pour mémoire, une fibre est un élément filiforme d'un matériau naturel ou artificiel, d'une longueur relativement courte. Un filament est un élément filiforme d'un matériau naturel ou artificiel, d'une longueur indéfinie ou quasi indéfinie. Au sens de l'invention, un fil désignera indifféremment un fil élémentaire, c'est-à-dire l'assemblage unitaire de fibres résultant normalement de la filature, ou un fil au sens propre, c'est-à-dire l'assemblage de fils élémentaires ou de filaments résultant normalement du retordage.

Parmi les filaments, fibres et/ou fils d'origine naturelle, on peut distinguer les fibres animales et les fibres végétales. Parmi les fibres animales, on peut citer la soie produite par divers insectes, notamment le bombyx du mûrier, ou les poils de divers mammifères (moutons, chèvres, lamas, par exemple) utilisés pour fabriquer la laine. Parmi les fibres d'origine végétale, on peut citer par exemple le coton, le lin, le chanvre ou la viscose. Des mélanges de ces différentes fibres d'origine animale et/ou végétale peuvent également être adaptés.

Parmi les fibres, filaments et fils synthétiques ou artificiels, on peut citer par exemple les polyamides, polyesters, polyacryliques, polyéthylènes, chlorofibres, polypropylènes, aramides, verres, polyuréthannes, carbones, polybenzimidazole, polyéther-éthercétone, polysulfure de phénylène, phénolique. L'homme du métier dispose d'une grande variété de matériaux synthétiques utiles dans le domaine textile, dont les applications varient en fonction de l'utilisation envisagée. Les composés suivants sont utiles comme matériaux ignifuges : aramides, verres, carbones, polybenzimidazole, polyéther-éthercétone, polysulfure de phénylène et phénolique.

Par ailleurs, il est connu de mélanger entre elles des fibres naturelles et synthétiques. Aussi, l'étoffe 2 peut comprendre un mélange de différents types de fibres, filaments et/ou fils, d'origine naturelle et/ou synthétique.

S'agissant de la céramique, celle-ci comprend au moins l'un des oxydes suivants : Al₂O₃, Fe₂O₃, TiO₂, Cr₂O₃, SiO₂. MgO, ZrO₂, MnO₂, Co₂O₃, Y₂O₃ et leurs mélanges. De préférence, elle comprend au moins des oxydes MnO₂ ou Co₂O₃ ou leur mélange. Mieux encore, elle comprend au moins un mélange de ces oxydes. En effet, les inventeurs ont pu constater que les oxydes MnO₂ et Co₂O₃, semblent contribuer de manière significative à l'émissivité du matériau composite. En d'autres termes, il semblerait que la mise en oeuvre de MnO₂ et Co₂O₃ permet d'augmenter l'émissivité du matériau composite, comme cela est illustré aux figures 4 et 5, qui représentent les diagrammes d'émissivité en fonction de la température de matériaux composites avec MnO₂ et Co₂O₃ (figure 4) et sans ces deux oxydes (figure 5). On constate une augmentation moyenne de 10 % de l'émissivité pour le matériau composite contenant MnO₂ et Co₂O₃ par rapport au matériau qui en est exempt, pour toutes les températures.

Ainsi, de préférence, la céramique comprend au moins 10% en masse de MnO₂, et de préférence de 10 à 20% en masse et comprend au moins 1 % en masse de Co₂O₃ et de préférence entre 1 et 5% de Co₂O₃ en masse. Avantageusement, la céramique possède la composition centésimale en masse suivante, la somme des pourcentages étant égale à 100% :
- TiO₂ de 10 à 60%, de préférence, de 30 à 40%,
- SiO₂ de 5 à 40%, de préférence, de 10 à 20%,
- MnO₂ de 5 à 40%, de préférence, de 10 à 20%,
- Al₂O₃ de 5 à 40%, de préférence, de 10 à 20%,
- Fe₂O₃ de 1 à 20%, de préférence, de 5 à 10%,
- Co₂O₃ de 1 à 10%, de préférence, de 3 à 7%,
- MgO de 0 à 10%, de préférence, de 3 à 7%,
- ZrO₂, Cr₂O₃, Y₂O₃ ≤ 5% chacun.

S'agissant du polymère qui constitue la matrice du matériau composite, il s'agit par exemple d'un polyuréthane, d'un acrylique, de chlorure de polyvinyle (PVC), de copolymère polystyrène-butadiène (SBS), de latex naturel ou artificiel (polyisoprène), polyester, polytétrafluoroéthylène (PTFE) ou tous autres polymères thermoplastique ou thermodurcissables. De préférence, il s'agit de polymères hydrophiles respirants ou de polymères sous forme microporeuse. Les mélanges de ces différents polymères sont également envisagés. Dans la description, le terme "le polymère", s'agissant de la matrice du matériau composite, sera compris comme couvrant également un mélange de polymères.

Ainsi, lorsqu'elles sont soudées le long de coutures, des membranes comprenant un matériau textile selon l'invention favorisent de le développement et le maintien qui procure une protection thermique, grâce à l'émission continue de rayonnements infrarouges lointains. On rappelle que les infrarouges lointains ont un bon pouvoir thermique et qu'ils favorisent la stimulation et l'entrée en résonance des molécules d'eau dans les zones superficielles du corps.

En conséquence, la sudation est stimulée. La vapeur produite est éliminée en continu à travers la membrane. La fine couche d'air entre la membrane et la peau reste chaude et sèche. Les céramiques du matériau textile peuvent développer leurs effets bénéfiques : conservation de la température, confort, en même temps que la membrane présente des qualités d'importance : forte imperméabilité à l'eau et caractère « respirant ».

Plusieurs variantes du procédé de fabrication d'un matériau textile selon l'invention vont maintenant être exposées. Selon une première variante, le matériau textile est obtenu à l'issue d'un procédé comprenant une étape d'assemblage de l'étoffe 2 et d'un film de matériau composite 6, à l'aide d'un adhésif. Selon une deuxième variante du procédé de fabrication, le matériau textile est obtenu à l'issue d'un procédé comprenant une étape d'enduction de l'étoffe 2 avec une composition d'enduction précurseur du matériau composite 6. Selon une troisième variante, le matériau textile est obtenu à l'issue d'un procédé comprenant une étape d'extrusion directe d'une couche de matériau composite associée à l'étoffe 2.

Dans la première variante du procédé de fabrication du matériau textile selon l'invention, on prépare un film 5 de matériau composite 6. On applique un adhésif sur une face du film de matériau composite ou sur une face de l'étoffe ou encore sur une face du film de matériau composite et sur une face de l'étoffe. Puis, on assemble le film de matériau composite et l'étoffe en mettant en contact la ou les faces sur laquelle ou sur lesquelles l'adhésif a été appliqué, afin de rendre l'étoffe et le film de matériau composite solidaires l'une de l'autre.

Ainsi, le procédé de fabrication, dans sa première variante, est assimilable à une technique de contre-collage. L'adhésif peut être appliqué sous forme d'une couche continue sur toute la surface considérée ou sous forme de points, de lignes ou d'autres motifs.

La préparation du film de matériau composite peut être réalisée de plusieurs façons. Dans un premier mode de préparation du film de matériau composite, on met en oeuvre une composition qui, après traitement, permet d'aboutir au matériau composite. Cette composition comprend au moins un liquide porteur, des particules de céramique dispersées dans le liquide porteur et un polymère ou son précurseur, dispersé ou dissous dans le liquide porteur. Le liquide porteur peut être une phase aqueuse ou une phase organique, en fonction du polymère envisagé. Généralement, en phase aqueuse, le polymère se trouve sous forme de dispersion. En phase organique, le polymère peut être dissous ou partiellement dissous ou également sous forme de dispersion.

Une fine couche de la composition est ensuite déposée, par exemple sur un papier transfert siliconé, selon une technique connue par ailleurs. Pour réaliser cette étape, il est connu d'utiliser un appareil de type ligne d'enduction avec une racle calée sur un cylindre. Le papier transfert siliconé circule entre la racle et le cylindre. La composition est déposée devant la racle, l'écartement entre la racle et le papier transfert siliconé permet le dépôt de la composition et le contrôle de l'épaisseur de la couche de composition.

Après avoir appliqué une couche de composition sur le papier transfert siliconé, on élimine le liquide porteur, par exemple par évaporation. Dans le cas d'une élimination du liquide porteur par évaporation, on chauffe la composition, par exemple à l'aide d'un banc infra-rouge, jusqu'à une température adéquate qui dépend de la nature du liquide porteur. La température d'évaporation vaut, par exemple, environ 60°C dans le cas d'une phase organique, ou environ 100°C lorsque le liquide porteur est une phase aqueuse. Puis, on fait réticuler le polymère, ou son précurseur, afin de former la matrice du matériau composite, en augmentant la température jusqu'à environ 160°C, de préférence progressivement. Ce faisant, les particules de céramique se trouvent emprisonnées dans la matrice, de façon homogène. Pour assurer la réticulation du polymère, ou de son précurseur, on prévoit un agent de réticulation dans la composition.

L'épaisseur e2 (figures 1 et 2) du film de matériau composite dépend de la quantité de composition déposée sur le papier transfert siliconé. Pour obtenir un film d'une épaisseur variant de 3 µm à 60 µm à sec, on dépose de 5 g/m² à 70 g/m² de composition. Par exemple, pour un film de 20 µm, on utilise entre 25 g/m² et 30 g/m² de composition. La quantité exacte de composition nécessaire pour une épaisseur de film visée, varie en fonction du polymère, ou de son précurseur, de la matrice, de la quantité de céramique dans la composition. Des essais à la portée de l'homme du métier permettent de déterminer cette quantité.

Le film de matériau composite est alors séparé du papier transfert siliconé et soit directement transféré pour être assemblé à l'étoffe, soit stocké sous forme de rouleaux. Par la suite, un adhésif est appliqué sur l'étoffe et/ou sur le film de matériau composite, avant d'assembler l'étoffé et le film de matériau composite, par exemple par laminage.

Dans un deuxième mode de préparation du film de matériau composite, on met en oeuvre des techniques d'extrusion. Brièvement, pour obtenir le film de matériau composite, on met en oeuvre une dispersion de céramique dans le polymère fondu. Après refroidissement, le polymère retrouve son état solide et forme la matrice du matériau composite, dans laquelle est dispersée la céramique.

A cet effet, on met en oeuvre une céramique tamisée selon une granulométrie très fine et homogène. En effet, il est préférable d'employer des matériaux homogènes dans les filières d'extrusion. Puis, la céramique est mélangée intimement avec le polymère thermoplastique, ou son précurseur, sous forme de granules solides. On fait passer ce mélange au travers d'une tête d'extrusion. Le mélange à base de céramique et de polymère thermoplastique est chauffé jusqu'au point de ramollissement et de fusion du polymère thermoplastique, du fait de la montée en température dans la tête d'extrusion. On fait progresser le mélange à travers les compartiments de chauffage et la tête d'extrusion, par exemple à l'aide de la vis sans fin. En sortie de la tête d'extrusion, le film de matériau composite peut être obtenu par calandrage, par soufflage ou par étirement, selon des techniques connues de l'homme du métier. Dans les deux cas, le mélange est refroidi jusqu'à solidification, afin d'obtenir un film de matériau composite.

Le film de matériau composite extrudé est soit directement transféré pour être assemblé à l'étoffe, soit stocké sous forme de rouleaux. Un adhésif est appliqué sur l'étoffe et/ou sur le film de matériau composite, avant d'assembler l'étoffe et le film de matériau composite, par exemple par laminage.

Le polymère peut se trouver sous la forme de granules ou de poudre pour extrusion. Ces produits sont des produits commerciaux.

Eventuellement, le film de matériau composite se trouve sous la forme d'une mousse, dont la préparation sera décrite plus loin.

Dans la deuxième variante du procédé de fabrication du matériau textile selon l'invention, on enduit directement au moins l'une des faces de l'étoffe à l'aide d'une composition d'enduction précurseur du matériau composite. Cette composition d'enduction est préparée de façon similaire à celle utilisée pour la préparation d'un film de matériau composite. La principale différence réside dans la viscosité de la composition d'enduction. En effet, la composition d'enduction a la consistance d'une pâte, c'est-à-dire qu'elle est beaucoup plus visqueuse que la composition utilisée pour préparer un film de matériau composite.

Après avoir enduit l'étoffe avec la composition d'enduction, s'agissant de techniques connues par ailleurs (par exemple la tête d'enduction peut être une racle ou un cadre rotatif), on procède au séchage de la composition et à la réticulation du polymère, ou de son précurseur, afin de former la couche de matériau composite. Le séchage et la réticulation sont réalisés dans un four de séchage, sur une ligne d'enduction classique dans le domaine technique. Le séchage permet d'éliminer le liquide porteur. Ce faisant, les particules de céramique se trouvent emprisonnées dans la matrice, de façon homogène. Pour assurer la réticulation du polymère, ou de son précurseur, on prévoit un agent de réticulation dans la composition d'enduction.

De même que dans la première variante du procédé de fabrication, l'épaisseur e2 (figure 1 ou 2) de la couche de matériau composite dépend de la quantité de matière déposée sur l'étoffe. Etant donné que la composition d'enduction utilisée dans la seconde variante du procédé de fabrication est plus visqueuse que la composition utilisée dans la première variante, il est plus facile d'obtenir une couche de matériau composite plus épaisse dans la seconde variante que dans la première. La quantité exacte de composition nécessaire pour une épaisseur visée, varie en fonction du polymère, ou de son précurseur, de la matrice, de la quantité de céramique dans la composition d'enduction. Des essais à la portée de l'homme du métier permettent de déterminer cette quantité.

Dans cette seconde variante, il est également possible de préparer une couche de matériau composite sous la forme d'une mousse, dont la préparation sera décrite plus loin.

Dans la troisième variante du procédé de fabrication du matériau textile selon l'invention, on prévoit une étape d'extrusion directe de la couche de matériau composite associée à l'étoffe. L'extrusion peut notamment être réalisée selon des techniques d'extrusion en filière plate ou d'extrusion soufflage. Dans ce cas, on met en oeuvre une dispersion de céramique dans le polymère, ou son précurseur, à l'état liquide. Généralement, le polymère, ou son précurseur, se trouve à l'état fondu. On dépose alors la dispersion liquide sur l'étoffe par extrusion. Puis on fait se solidifier le polymère, pour former la matrice du matériau composite. La solidification peut être réalisée par exemple par refroidissement naturel, ou par refroidissement forcé (notamment par ventilation ou à l'aide d'une installation de refroidissement).

De même que lors de la préparation d'un film de matériau composite par extrusion, on met en oeuvre une céramique tamisée afin d'obtenir une granulométrie très fine est régulière. Puis la céramique est mélangée intimement avec un polymère thermoplastique, ou son précurseur, sous forme de granules solides. On fait passer ce mélange au travers d'une tête d'extrusion. Le mélange à base de céramique et de polymère thermoplastique est chauffé jusqu'au point de ramollissement et de fusion du polymère thermoplastique, du fait de la montée en température dans la tête d'extrusion. On obtient une dispersion de céramique dans le polymère, ou son précurseur, à l'état liquide. On fait progresser cette dispersion à travers les compartiments de chauffage et la tête d'extrusion, par exemple à l'aide de la vis sans fin.

En sortie de la tête d'extrusion, la dispersion fondue est déposé sur l'étoffe, par exemple au moyen d'un cylindre perforé. La dispersion fondue est poussé au travers des perforations du cylindre perforé, puis elle est aplanie avec une racle, afin de former un film d'épaisseur uniforme. La dispersion fondue peut aussi être déposée sur l'étoffe au moyen d'un cylindre callé sur une racle. Le cylindre va se charger dispersion fondue, laquelle est transférée sur l'étoffe, sous la forme d'un film dont l'épaisseur dépend de l'écartement entre le cylindre et la racle. Comme cela a été mentionné ci-dessus, le mélange est refroidi jusqu'à solidification, afin d'obtenir un film de matériau composite.

Dans les différentes variantes du procédé de fabrication du matériau textile, on peut préparer une mousse de la façon suivante. La mousse peut être obtenue soit par un procédé physique, soit par un procédé chimique, soit par une combinaison des deux. Dans le cas d'un procédé physique, on utilise un appareil qui soumet la composition d'enduction ou la composition précurseur du film de matériau composite, à une agitation mécanique intense. Il s'agit par exemple d'un mousseur mécanique. Dans ce cas, on obtient une mousse qui est enduite directement sur l'étoffe, ou déposée sur un film transfert siliconé. Après séchage et polymérisation, la mousse est stabilisée.

Dans un procédé chimique, on intègre dans la composition d'enduction ou la composition précurseur du film de matériau composite, des agents moussants susceptibles de se dégrader sous forme de gaz, sous l'effet de la température, en particulier au moment de la réticulation du matériau composite.

Une couche de matériau composite sous forme de mousse peut avoir une épaisseur e2 plus importante que l'épaisseur e1 de l'étoffe 2. Par exemple l'épaisseur e2 de la couche de matériau composite sous forme de mousse peut atteindre jusqu'à 3 mm, voire 5 mm.

L'invention va maintenant être illustrée par les exemples suivants.

### EXEMPLES

Dans les exemples, la céramique utilisée possède la composition moyenne indiquée dans le tableau 1 ci-dessous :

**TABLEAU 1**

| ***Composition centésimale en masse moyenne d'une céramique émettrice d'infrarouges lointains*** | |
|---|---|
| Oxyde | % en masse |
| TiO₂ | 30 à 40% |
| SiO₂ | 10 à 20% |
| MnO₂ | 10 à 20% |
| Al₂O₃ | 10 à 20% |
| Fe₂O₃ | 5 à 10% |
| MgO | 3 à 7% |
| Co₂O₃ | 3 à 7% |
| ZrO₂ | ≤ 5% |

### Exemple 1 - Préparation d'un matériau textile par contre-collage

On utilise un tissu polyamide traité hydrophobe/oléophobe par foulardage sur le tissu avec du Téflon®, selon un procédé connu par ailleurs.

On prépare un film de matériau composite à partir de la composition suivante (% en masse de la composition) :
- phase liquide organique : mélange d'alcool isopropylique et de toluol, 63 % en masse (liquide porteur)
- polyuréthane aliphatique éther-ester hydrophile, en solution dans la phase liquide organique, 30 % en masse
- céramique (tableau 1), dispersée dans la composition, 7 % en masse
- agent de réticulation : polyisocyanate, quantité suffisante pour effectuer la réticulation du polyuréthane

Il est également possible d'ajouter des pigments et/ou colorants dans la dispersion.

La composition à base de polyuréthane et de céramique est déposée sur un papier transfert siliconé. Puis, elle est séchée à une température d'environ 60°C avant d'être réticulée (ou polymérisée) à une température d'environ 160°C.

On obtient un film de polyuréthane comprenant la céramique dispersée. Le film contient 30% en masse de céramique et 70% en masse de polyuréthane, qui constituent la matrice polymère du film. Le film de matériau composite ainsi obtenu est séparé du papier transfert siliconé. On applique ensuite sur le film de matériau composite un adhésif à base de polyuréthane hydrophile, appliqué au cadre rotatif.

Ensuite, la face du film de matériau composite sur laquelle on a appliqué l'adhésif est mise en contact avec l'étoffe, puis laminée pour améliorer l'adhésion.

On obtient alors une étoffe polyamide traité hydrophobe/oléophobe recouvert d'un film polyuréthane contenant des particules de céramique. Ce matériau textile est déperlant (traitement hydrophobeloléophobe), respirant (utilisation de polyuréthane hydrophile) et il peut procurer une sensation de chaleur grâce au matériau composite. Ce matériau composite est utile notamment pour la confection de vêtements extérieurs tels que blousons, vestes, parkas, combinaisons de ski, etc.

Un matériau textile selon l'exemple 1 peut également être utilisé pour la confection de vêtements à usage sportif, grâce à ses qualités de textile respirant.

### Exemple 2 - Fabrication d'un matériau textile par enduction directe

Dans cet exemple, on utilise comme étoffe un tissu à base d'un mélange de coton et de polyester. L'enduction est réalisée à partir d'une pâte à base d'un polyuréthane hydrophile similaire au polyuréthane utilisé dans l'exemple 1. Cependant, contrairement à l'exemple 1, le polyuréthane est sous forme d'une dispersion en phase-aqueuse. La pâte contient (% en masse de la composition) :
- dispersion de polyuréthane dans l'eau (50 : 50 en masse de la dispersion), 80 % en masse. L'eau est le liquide porteur.
- céramique (tableau 1) : dispersée dans la pâte, 15 % en masse
- agent de réticulation : 5 % en masse

Il est également possible d'ajouter des pigments et/ou colorants dans la composition.

La pâte est enduite sur le tissu, à l'aide d'une tête d'enduction. L'ensemble est ensuite séché à environ 100°C, puis soumis à une température d'environ 160°C pour la réticulation de la matrice polymère, dans un four de séchage par réticulation. Le matériau composite ainsi obtenu contient 30% en masse de céramique et 70% en masse de matrice polymère.

On peut utiliser le matériau obtenu dans l'exemple 2, par exemple pour la protection des matelas ou la fabrication d'alèses. Dans ce cas, la couche de matériau composite est au contact du matelas. Puis une deuxième couche est appliquée de la même façon pour garantir une bonne imperméabilité.

### Exemple 3 - Matériau composite sous forme de mousse

Dans cet exemple, on fabrique un matériau textile dans lequel le matériau composite se trouve sous forme de mousse. Un tel matériau textile est utile pour la confection de divers accessoires vestimentaires, telles que des semelles de chaussures, des épaulettes, etc.

Pour fabriquer ce matériau, on utilise comme étoffe un tissu ou un non tissé de préférence. L'étoffe est enduite d'une mousse, sur une épaisseur d'environ 3 mm, c'est-à-dire très supérieure à l'épaisseur de l'étoffe.

La mousse est préparée à partir d'une composition précurseur contenant 63 % en masse d'une dispersion de polyuréthanne dans l'eau (50:50 en masse), 30 % en masse de céramique (tableau 1), 5 % en masse de polyisocyanate comme agent réticulant, un agent moussant (sulfosuccinate de sodium, 1% en masse), de l'ammoniaque liquide pour réguler le pH et un stabilisateur de mousse (stéarate d'ammonium).

Il est également possible d'ajouter des pigments et/ou colorants dans la composition.

Avant d'être enduite sur l'étoffe, la composition est transvasée dans un appareil mousseur, afin de préparer une mousse mécanique, c'est-à-dire une mousse obtenue à l'issue d'un procédé mécanique. La mousse est enduite sur l'étoffe, puis l'ensemble est séché et polymérisé comme décrit précédemment. La polymérisation permet de stabiliser la mousse.

### Exemple 4 - Matériau textile ignifuge

Un matériau textile ignifuge est fabriqué par enduction directe d'une composition d'enduction précurseur à base de polyuréthane hydrophile dans un liquide porteur en phase aqueuse ou en phase organique (voir les exemples précédents), sur une étoffe sur laquelle est collé un film de polytétrafluoroéthylène (PTFE) disponible commercialement. Avantageusement, les fibres de cette étoffe peuvent également être ignifuges.

On obtient ainsi un matériau textile comprenant successivement une étoffe contre-collée d'une couche de PTFE elle-même enduite d'une couche de matériau composite dont la composition est comparable à celle du film de l'exemple 1.

Un tel matériau est utile pour confectionner des vêtements ignifuges, notamment à usage extérieur, en particulier à l'usage des pompiers, soldats et autre personnel susceptibles d'être confrontés aux incendies.

### Exemple 5- Matériau textile composite "Complexe trois couches"

On utilise un tissu polyamide traité hydrophobe/oléophobe par foulardage sur le tissu avec du Téflon®, selon un procédé connu par ailleurs.

On prépare un film de matériau composite à partir de la composition suivante (% en masse de la composition) :
- phase liquide organique : mélange d'alcool isopropylique et de toluol, 63 % en masse (liquide porteur)
- polyuréthane aliphatique éther-ester hydrophile, en solution dans la phase liquide organique, 30 % en masse
- céramique (tableau 1), dispersée dans la composition, 7 % en masse
- agent de réticulation : polyisocyanate, quantité suffisante pour effectuer la réticulation du polyuréthane

Il est également possible d'ajouter des pigments et/ou colorants dans la composition.

La composition à base de polyuréthane et de céramique est déposée sur un papier transfert siliconé. Puis, elle est séchée à une température d'environ 60°C avant d'être réticulée (ou polymérisée) à une température d'environ 160°C.

On obtient un film de polyuréthane comprenant la céramique dispersée. Le film contient 30% en masse de céramique et 70% en masse de polyuréthane, qui constituent la matrice polymère du film. Le film de matériau composite ainsi obtenu est séparé du papier transfert siliconé. On applique ensuite sur le film de matériau composite un adhésif "hot melt" (à haut point de fusion) constitué de polyuréthane réactif, à l'aide d'un cylindre gravé.

Ensuite, la face du film de matériau composite sur laquelle on a appliqué l'adhésif "hot melt" est mise en contact avec l'étoffe, puis laminée pour améliorer l'adhésion.

On applique ensuite sur la face externe du film de matériaux composite déjà complexé avec le tissu extérieure en polyamide, un adhésif "hot melt" constitué de polyuréthane réactif, à l'aide d'un cylindre gravé. Puis on met en contact l'adhésif avec un tissu intérieur, par exemple une maille en polyamide. L'ensemble est de nouveau laminé pour améliorer l'adhésion.

La figure 3 illustre cet exemple de matériau textile 1 "complexe trois couches", avec les étoffes 2, 2', la couche 5 de matériau composite 6, les interfaces 8 d'adhésif "hot melt" situés au niveau des faces 4, 4' des étoffes 2.

### Exemple 6 - Préparation d'un matériau textile par contre-collage

On utilise un tissu polyamide traité hydrophobe/oléophobe par foulardage sur le tissu avec du Téflon®, selon un procédé connu par ailleurs.

On prépare un film de matériau composite à partir de la composition suivante (% en masse de la composition) :
- phase liquide organique : mélange d'alcool isopropylique et de toluol, 63 % en masse (liquide porteur)
- polyuréthane aliphatique éther-ester hydrophile, en solution dans la phase liquide organique, 30 % en masse
- céramique (tableau 1), dispersée dans la composition, 7 % en masse
- agent de réticulation : polyisocyanate, quantité suffisante pour effectuer la réticulation du polyuréthane

II est également possible d'ajouter des pigments et/ou colorants dans la dispersion.

La composition à base de polyuréthane et de céramique est déposée sur un papier transfert assemblé avec une couche de PTFE, de manière à former un bicouche. Puis, elle est séchée à une température d'environ 60°C avant d'être réticulée (ou polymérisée) à une température d'environ 160°C.

On obtient un bicouche formé par un film de polyuréthane comprenant la céramique dispersée et par une couche de PTFE assemblé audit film. Ce dernier contient 30% en masse de céramique et 70% en masse de polyuréthane, qui constituent la matrice polymère du film. Le film de matériau composite ainsi obtenu est séparé du papier transfert siliconé. On applique ensuite sur le film de matériau composite un adhésif à base de polyuréthane hydrophile, appliqué au cadre rotatif.

Ensuite, la face du film de matériau composite sur laquelle on a appliqué l'adhésif est mise en contact avec l'étoffe, puis laminée pour améliorer l'adhésion.

On obtient alors une étoffe polyamide traitée hydrophobe/oléophobe recouverte d'un bicouche formé par un film polyuréthane contenant des particules de céramique et par une couche de PTFE. Ce matériau textile est déperlant (traitement hydrophobe/oléophobe), respirant (utilisation de polyuréthane hydrophile) et il peut procurer une sensation de chaleur grâce au matériau composite. Ce matériau composite est utile notamment pour la confection de vêtements extérieurs tels que blousons, vestes, parkas, combinaisons de ski, etc.

Un matériau textile selon l'exemple 1 peut également être utilisé pour la confection de vêtements à usage sportif, grâce à ses qualités de textile respirant.

### Exemple 7 - Diagramme d'émissivité du matériau textile de l'exemple 1

On mesure l'émissivité d'un matériau textile préparé selon l'exemple 1. Les résultats sont représentés sous forme d'un diagramme d'émissivité, aux figures 4 et 5. Pour la figure 4, il s'agit d'un matériau dans lequel la céramique contient les oxydes MnO₂ et Co₂O₃. Pour la figure 5, il s'agit d'un matériau dans lequel la céramique ne contient ni l'oxyde MnO₂ ni l'oxyde Co₂O₃.

Céramique avec MnO₂ et Co₂O₃ (figure 4) : Pour toutes les longueurs d'ondes d'infrarouges lointains comprises entre 4 et 20 µm, l'émissivité du matériau est supérieure à 85% et elle atteint un maximum de l'ordre de 95 % pour les longueurs d'ondes supérieures à 6 µm. L'émissivité totale vaut 94,54 % pour les longueurs d'ondes comprises entre 4 et 20 µm.

Céramique sans MnO₂ et sans Co₂O₃ (figure 5) :Au contraire, ce matériau présente une émissivité qui croît doucement de 60 % pour une longueur d'onde de 4 µm, pour atteindre un maximum de 80 % autour d'une longueur d'onde de 16 µm.

## Revendications

1. Matériau textile (1) comprenant au moins une étoffe (2, 2'), **caractérisé en ce qu'**au moins une partie d'au moins l'une des deux faces (3, 4, 4') de l'étoffe (2, 2') est associée à au moins une couche (5) comportant un matériau composite (6) comprenant des particules de céramique dispersées dans une matrice à base de polymère, de préférence du polyuréthane, la céramique représentant de 1 à 60% en masse du matériau composite, étant susceptible d'émettre au moins un rayonnement infrarouge lointain, dans lequel la céramique comprend MnO₂ et Co₂O₃.

2. Matériau textile selon la revendication 1, dans lequel la céramique comprend au moins l'un des oxydes suivants : Al₂O₃, Fe₂O₃, TiO₂, Cr₂O₃, SiO₂, MgO, ZrO₂, MnO₂, Co₂O₃, Y₂O₃.

3. Matériau textile selon l'une des revendications précédentes, dans lequel la céramique comprend au moins 10% en masse de MnO₂ et au moins 1 % en masse de Co₂O₃.

4. Matériau textile selon la revendication 1 dans lequel la céramique comprend au moins 5% de SiO₂, de préférence de 5 à 40 % de SiO₂.

5. Matériau textile selon l'une quelconque des revendications 1, 2 et 4, dans lequel la céramique a la composition centésimale en masse suivante, la somme des pourcentages étant égale à 100% :
- TiO₂ de 10 à 60%,
- SiO₂ de 5 à 40%,
- MnO₂ de 5 à 40%,
- Al₂O₃ de 5 à 40%,
- Co₂O₃ de 1 à 10%,
- Fe₂O₃ de 1 à 20%,
- MgO de 0 à 10%,
- ZrO₂, Cr₂O₃, Y₂O₃ ≤ 5% chacun.

6. Matériau textile selon l'une quelconque des revendications précédentes, dans lequel le matériau composite (6) n'est pas poreux.

7. Matériau textile selon l'une quelconque des revendications précédentes, dans lequel la matrice est à base de polymère hydrophile respirant.

8. Matériau textile selon l'une quelconque des revendications précédentes, dans lequel l'étoffe (2, 2') est associée en outre à au moins une couche (7) de matériau ignifuge, de préférence interposée entre l'étoffe (2, 2') et la couche (5) de matériau composite (6).

9. Matériau textile selon l'une quelconque des revendications précédentes, comprenant au moins deux étoffes (2, 2'), identiques ou différentes entre elles, et au moins une couche (5) de matériau composite (6), une couche (5) de matériau composite (6) étant interposée entre deux étoffes (2, 2').

10. Matériau textile selon l'une quelconque des revendications précédentes, dans lequel au moins une couche (5) de matériau composite (6) est revêtue d'au moins une couche de polymère, de préférence du polytétrafluoroéthylène, de manière à former un multicouche, avantageusement un bicouche.

11. Article textile comprenant un matériau textile selon l'une quelconque des revendications précédentes, notamment vêtement intérieur, extérieur, accessoire vestimentaire, linge de maison.

12. Procédé de fabrication d'un matériau textile tel que défini dans l'une des revendications 1 à 10 dans lequel l'étoffe (2, 2') est assemblée à un film (5) de matériau composite (6) à l'aide d'un adhésif (8), ledit procédé comprenant les étapes essentielles suivantes :
- on prévoit un film de matériau composite, éventuellement sous forme de mousse,
- on applique un adhésif sur une face du film de matériau composite, et/ou sur une face de l'étoffe,
- on assemble le film de matériau composite et l'étoffe au niveau de la, ou des, face(s) sur laquelle, ou sur lesquelles, un adhésif a été éventuellement appliqué, afin d'obtenir ledit matériau textile.

13. Procédé de fabrication d'un matériau textile tel que défini dans l'une des revendications 1 à 10 dans lequel l'étoffe (2, 2') est enduite avec une composition d'enduction précurseur du matériau composite (6), ledit procédé comprenant les étapes essentielles suivantes :
- on met en oeuvre une composition d'enduction précurseur du matériau composite, la composition d'enduction comprenant au moins : un liquide porteur, des particules de céramique dispersées dans le liquide porteur et un polymère, ou son précurseur, dispersé ou dissout dans le liquide porteur,
- on enduit l'étoffe avec ladite composition d'enduction,
- puis on élimine le liquide porteur, de préférence par évaporation,
- puis éventuellement, on fait réticuler le polymère, ou son précurseur, pour former la matrice du matériau composite.

14. Procédé de fabrication d'un matériau textile tel que défini dans l'une des revendications 1 à 10 dans lequel l'étoffe est associée à une couche (5) de matériau composite (6) par extrusion directe, ledit procédé comprenant les étapes essentielles suivantes :
- on met en oeuvre une dispersion de céramique dans le polymère, ou son précurseur, à l'état liquide,
- puis on dépose la dispersion sur l'étoffe, par extrusion,
- puis on fait se solidifier le polymère, pour former la matrice du matériau composite.

15. Procédé de fabrication d'un matériau textile tel que défini dans la revendication 10, ledit procédé comprenant les étapes essentielles suivantes :
- on prévoit au moins un film de matériau composite, éventuellement sous forme de mousse,
- on prévoit au moins un film de polymère, de préférence du polytétrafluoroéthylène,
- on applique un adhésif sur une face du film de matériau composite, et/ou sur une face du film de polymère,
- on assemble le film de matériau composite et le film de polymère au niveau de la, ou des, face(s) sur laquelle, ou sur lesquelles, un adhésif a été éventuellement appliqué, afin d'obtenir un multicouche, de préférence un bicouche,
- on assemble le multicouche, de préférence le bicouche, et l'étoffe.

## Claims

1. Textile material (1) comprising at least one fabric (2, 2'), **characterized in that** at least a part of at least one of the two faces (3, 4, 4') of the fabric (2, 2') is combined with at least one layer (5) containing a composite material (6) comprising ceramic particles dispersed in a matrix based on a polymer, preferably polyurethane, the ceramic representing from 1 to 60% by mass of the composite material, being capable of emitting at least one far infra-red radiation, in which the ceramic comprises MnO₂ and Co₂O₃.

2. Textile material according to claim 1, in which the ceramic comprises at least one of the following oxides: Al₂O₃, Fe₂O₃, TiO₂, Cr₂O₃, SiO₂, MgO, ZrO₂, MnO₂, Co₂O₃, Y₂O₃.

3. Textile material according to one of the previous claims, in which the ceramic comprises at least 10% by mass of MnO₂ and at least 1% by mass of Co₂O₃.

4. Textile material according to claim 1, in which the ceramic comprises at least 5% of SiO₂ preferably 5 to 40% of SiO₂.

5. Textile material according to any one of claims 1, 2 and 4, in which the ceramic has the following composition, centesimal by mass, the sum of the percentages being equal to 100%:
- TiO₂ from 10 to 60%
- SiO₂ from 5 to 40%
- MnO₂ from 5 to 40%
- Al₂O₃ from 5 to 40%
- Co₂O₃ from 1 to 10%
- Fe₂O₃ from 1 to 20%
- MgO from 0 to 10%
- ZrO₂, Cr₂O₃, Y₂O₃ ≤ 5% each.

6. Textile material according to any one of the previous claims, in which the composite material (6) is not porous.

7. Textile material according to any one of the previous claims, in which the matrix is based on a breathable hydrophilic polymer.

8. Textile material according to any one of the previous claims, in which the fabric (2, 2') is combined moreover with at least one layer (7) of flame resistant material, preferably interposed between the fabric (2, 2') and the layer (5) of composite material (6).

9. Textile material according to any one of the previous claims, comprising at least two fabrics (2, 2') that are identical to or different from each other, and at least one layer (5) of composite material (6), a layer (5) of composite material (6) being interposed between two fabrics (2, 2').

10. Textile material according to any one of the previous claims, in which at least one layer (5) of composite material (6) is coated with at least one layer of polymer, preferably polytetrafluoroethylene, so as to form a multilayer, advantageously a bilayer.

11. Textile article comprising a textile material according to any one of the previous claims, in particular indoor, outdoor clothing, clothing accessories, household linen.

12. Method for the manufacture of a textile material as defined in one of claims 1 to 10 in which the fabric (2, 2') is assembled with a film (5) of composite material (6) using an adhesive (8), said method comprising the following essential steps:
- a film of composite material is provided, optionally in the form of foam,
- an adhesive is applied onto one face of the film of composite material, and/or onto one face of the fabric,
- the film of composite material and the fabric are assembled at the level of the face or faces onto which an adhesive has optionally been applied, in order to obtain said textile material.

13. Method for the manufacture of a textile material as defined in one of claims 1 to 10 in which the fabric (2, 2') is coated with a coating composition that is a precursor of the composite material (6), said method comprising the following essential steps:
- a coating composition that is a precursor of the composite material is used, the coating composition comprising at least: a carrier liquid, ceramic particles dispersed in the carrier liquid and a polymer, or its precursor, dispersed or dissolved in the carrier liquid,
- the fabric is coated with said coating composition,
- then the carrier liquid is eliminated, preferably by evaporation,
- then optionally, the polymer, or its precursor, is crosslinked in order to form the matrix of the composite material.

14. Method for the manufacture of a textile material as defined in one of claims 1 to 10 in which the fabric is combined with a layer (5) of composite material (6) by direct extrusion, said method comprising the following essential steps:
- a ceramic dispersion is used in the polymer, or its precursor, in the liquid state,
- the dispersion is then deposited on the fabric, by extrusion,
- then the polymer is solidified in order to form the matrix of the composite material.

15. Method for the manufacture of a textile material as defined in claim 10, said method comprising the following essential steps:
- a film of composite material is provided, optionally in the form of foam,
- at least one polymer film is provided, preferably polytetrafluoroethylene,
- an adhesive is applied onto one face of the film of composite material, and/or onto one face of the polymer film,
- the film of composite material and the polymer film are assembled at the level of the face(s) onto one or both of which an adhesive has optionally been applied, in order to obtain a multilayer, preferably a bilayer.
- the multilayer, preferably the bilayer, and the fabric are assembled.

## Patentansprüche

1. Textiles Material (1), das mindestens ein Flächengebilde (2, 2') umfasst, **dadurch gekennzeichnet, dass** mindestens ein Teil von mindestens einer der beiden Seiten (3, 4, 4') des Flächengebildes (2, 2') mindestens einer Schicht (5) zugehörig ist, die ein Verbundmaterial (6) aufweist, das Keramikpartikel umfasst, die in einer Matrix auf Basis eines Polymers, vorzugsweise Polyurethan, verteilt sind, wobei die Keramik 1 bis 60 Gewichts-% des Verbundmaterials darstellt und mindestens eine Strahlung im fernen Infrarotbereich emittieren kann, wobei die Keramik MnO₂ und Co₂O₃ umfasst.

2. Textiles Material nach Anspruch 1, bei dem die Keramik mindestens eins der folgenden Oxide umfasst: Al₂O₃, Fe₂O₃, TiO₂, Cr₂O₃, SiO₂, MgO, ZrO₂, MnO₂, Co₂O₃, Y₂O₃.

3. Textiles Material nach einem der vorhergehenden Ansprüche, bei dem die Keramik mindestens 10 Gewichts-% MnO₂ und mindestens 1 Gewichts-% Co₂O₃ umfasst.

4. Textiles Material nach Anspruch 1, bei dem die Keramik mindestens 5% SiO₂, vorzugsweise 5 bis 40% SiO₂, umfasst.

5. Textiles Material nach einem der Ansprüche 1, 2 und 4, bei dem die Keramik die folgende prozentuale Massezusammensetzung aufweist, wobei die Summe der Prozentangaben 100% entspricht:
- TiO₂ von 10 bis 60%,
- SiO₂ von 5 bis 40%,
- MnO₂ von 5 bis 40%,
- Al₂O₃ von 5 bis 40%,
- Co₂O₃ von 1 bis 10%,
- Fe₂O₃ von 1 bis 20%,
- MgO von 0 bis 10%,
- ZrO₂, Cr₂O₃, Y₂O₃ jeweils ≤ 5%.

6. Textiles Material nach einem der vorhergehenden Ansprüche, bei dem das Verbundmaterial (6) nicht porös ist.

7. Textiles Material nach einem der vorhergehenden Ansprüche, bei dem die Matrix auf einem atmungsaktiven hydrophilen Polymer basiert.

8. Textiles Material nach einem der vorhergehenden Ansprüche, bei dem das Flächengebilde (2, 2') ferner mindestens einer Schicht (7) aus einem schwer entflammbaren Material zugehörig ist, die vorzugsweise zwischen dem Flächengebilde (2, 2') und der Schicht (5) aus dem Verbundmaterial (6) angeordnet ist.

9. Textiles Material nach einem der vorhergehenden Ansprüche, das mindestens zwei Flächengebilde (2, 2') umfasst, die identisch sind oder sich voneinander unterscheiden, und mindestens eine Schicht (5) aus dem Verbundmaterial (6), wobei eine Schicht (5) aus dem Verbundmaterial (6) zwischen den zwei Flächengebilden (2, 2') angeordnet ist.

10. Textiles Material nach einem der vorhergehenden Ansprüche, bei dem mindestens eine Schicht (5) aus dem Verbundmaterial (6) mit mindestens einer Schicht aus einem Polymer, vorzugsweise Polytetrafluorethylen, beschichtet ist, um eine Mehrfachschicht, vorteilhafterweise eine Zweifachschicht, zu bilden.

11. Textiler Gegenstand, der ein textiles Material nach einem der vorhergehenden Ansprüche umfasst, insbesondere Hausbekleidung, Straßenbekleidung, Bekleidungszubehör, Haushaltswäsche.

12. Verfahren zur Herstellung eines textilen Materials, wie es in einem der Ansprüche 1 bis 10 definiert ist, bei dem das Flächengebilde (2, 2') mithilfe eines Klebstoffs (8) mit einer Folie (5) aus dem Verbundmaterial (6) verbunden wird, wobei das Verfahren folgende wesentliche Schritte umfasst:
- es wird eine Folie aus Verbundmaterial vorgesehen, gegebenenfalls in Form von Schaum,
- auf einer Seite der Folie aus Verbundmaterial und/oder auf einer Seite des Flächengebildes wird ein Klebstoff aufgebracht,
- die Folie aus Verbundmaterial wird mit dem Flächengebilde im Bereich der Seite(n), auf die eventuell ein Klebstoff aufgebracht wurde, verbunden, um das textile Material zu erhalten.

13. Verfahren zur Herstellung eines textilen Materials, wie es in einem der Ansprüche 1 bis 10 definiert ist, bei dem das Flächengebilde (2, 2') mit einer Beschichtungszusammensetzung, die ein Vorläufer des Verbundmaterials (6) ist, beschichtet wird, wobei das Verfahren folgende wesentliche Schritte umfasst:
- es wird eine Beschichtungszusammensetzung, die ein Vorläufer des Verbundmaterials ist, verwendet, wobei die Beschichtungszusammensetzung mindestens Folgendes umfasst: eine Trägerflüssigkeit, Keramikpartikel, die in der Trägerflüssigkeit verteilt sind, und ein Polymer, oder seinen Vorläufer, das bzw. der in der Trägerflüssigkeit verteilt oder gelöst ist,
- das Flächengebilde wird mit der Beschichtungszusammensetzung beschichtet,
- anschließend wird die Trägerflüssigkeit, vorzugsweise durch Verdampfen, entfernt,
- anschließend wird gegebenenfalls das Polymer oder sein Vorläufer vernetzt, um die Matrix des Verbundmaterials zu bilden.

14. Verfahren zur Herstellung eines textilen Materials, wie es in einem der Ansprüche 1 bis 10 definiert ist, bei dem das Flächengebilde durch Direktextrusion mit einer Schicht (5) aus dem Verbundmaterial (6) verbunden wird, wobei das Verfahren folgende wesentliche Schritte umfasst:
- es wird eine Dispersion aus Keramik in dem Polymer, oder seinem Vorläufer, im flüssigen Zustand verwendet,
- anschließend wird die Dispersion durch Extrusion auf dem Flächengebilde aufgetragen,
- anschließend wird das Polymer erstarren gelassen, um die Matrix des Verbundmaterials zu bilden.

15. Verfahren zur Herstellung eines textilen Materials, wie es in Anspruch 10 definiert ist, wobei das Verfahren folgende wesentliche Schritte umfasst:
- es wird mindestens eine Folie aus Verbundmaterial vorgesehen, gegebenenfalls in Form von Schaum,
- es wird mindestens eine Folie aus einem Polymer, vorzugsweise Polytetrafluorethylen, vorgesehen,
- ein Klebstoff wird auf einer Seite der Folie aus Verbundmaterial und/oder auf einer Seite der Polymerfolie aufgebracht,
- die Folie aus Verbundmaterial wird mit der Polymerfolie im Bereich der Seite(n), auf die gegebenenfalls ein Klebstoff aufgebracht wurde, verbunden, um eine Mehrfachschicht, vorzugsweise eine Zweifachschicht, zu erhalten,
- die Mehrfachschicht, vorzugsweise die Zweifachschicht, wird mit dem Flächengebilde verbunden.
